# EUROPÄISCHE PATENTSCHRIFT

(11) **EP 3 190 094 B1**
(45) Veröffentlichungstag und Bekanntmachung des Hinweises auf die Patenterteilung: **05.12.2018**
(21) Anmeldenummer: 16002665.4
(22) Anmeldetag: 15.12.2016
(51) Int. Cl.: C03B 40/027, C03B 9/16, C03B 9/193, C03B 9/41, C03B 11/16, C03B 9/13, C03B 9/40

(54) **VORRICHTUNG ZUM HERSTELLEN VON HOHLGLASARTIKELN**
DEVICE FOR PRODUCING HOLLOW GLASS ITEMS
DISPOSITIF DE FABRICATION DE PRODUITS EN VERRE CREUX

(30) Priorität: 08.01.2016 DE 102016000125
(43) Veröffentlichungstag der Anmeldung: 12.07.2017
(73) Patentinhaber: Heye International GmbH, 31683 Obernkirchen (DE)
(72) Erfinder: VORSPEL, Bernard, 4825 JR Breda (NL)
(74) Vertreter: Sobisch, Peter

(56) Entgegenhaltungen:
- WO-A1-2010/055251
- US-A- 3 814 594
- US-A- 5 785 727

## Beschreibung

Die Erfindung bezieht sich auf eine Vorrichtung entsprechend dem Oberbegriff des Anspruchs 1.

Eine Glasformmaschine, insbesondere eine I.S. Maschine umfasst ausgehend von der Zufuhr eines sich in einem schmelzflüssigen Zustand befindlichen Glastropfens bis zum Austrag eines abschließend geformten Hohlglasartikels zahlreiche Baugruppen, Mechanismen, Mess- und Handlingsysteme, die neben einer Überwachung auch einer Wartung bedürfen, welches mit Eingriffen in die Maschine verbunden und häufig aus Sicherheitsgründen bei laufendem Betrieb nicht oder kaum möglich ist. Ein Maschinenstillstand ist andererseits jedoch bereits aus Kostengründen höchst unerwünscht und sollte auf ein Mindestmaß beschränkt sein. Es ist bekannt, diese Eingriffe mit maschinellen Mitteln durchzuführen oder zumindest zu unterstützen.

Aus der Druckschrift US 5 785 727 B ist eine Vorrichtung zur Herstellung von Bildröhren bekannt, bei der auf einem Drehtisch eine Vielzahl von Formen angeordnet ist, in denen der Formgebungsvorgang an einem Tropfen aus schmelzflüssigen Glas unter Mitwirkung eines in einer Formstation von oben in diese absenkbaren Pressstempels durchgeführt wird. Um ein Ablösen eines auf diese Weise hergestellten Glasformkörpers von den Innenwandungen der Form und den Außenwandungen des Pressstempels zu erleichtern, ist ein Schmierroboter vorgesehen, der zum Auftragen eines Schmiermittels auf diese Wandungen eingerichtet ist. Der Schmierroboter besteht aus einem an einer Stelle entlang der Peripherie des Drehtisches höhenverstellbar angeordneten Grundkörper, an dem ein sechs Bewegungsachsen aufweisendes, an seinem freien Ende mit einem Sprühkopf versehenes mehrgliedriges Führungsorgan angelenkt ist, welches über eine Versorgungsleitung mit einem Schmiermittelreservoir in Verbindung steht. Der Sprühkopf ist vertikal über die offene Oberseite der Form in diese ein- und aus dieser ausfahrbar und unter Mitwirkung einer Steuerung zum Sprühen des Schmiermittels auf die genannten, während des Formgebungsprozesses mit dem Glaswerkstoff in Berührung gelangenden Wandungen eingerichtet. Die zu schmierenden Formen gelangen nach Maßgabe der Rotation des Drehtisches in den Einwirkungsbereich des Schmierroboters.

Aus der Druckschrift EP 0 372 530 A1 ist eine Vorrichtung zum Auftragen eines Schmiermittels auf die Innenflächen einer zur Herstellung von Hohlglasartikeln bestimmten Form bekannt, die oberhalb der Form, und zwar seitlich versetzt zu deren Achse positioniert ist. Die Vorrichtung trägt ein Führungsorgan, an dessen freien Ende sich ein Sprühkopf befindet, der zwischen einer aktiven, das heißt zum Sprühen eines Schmiermittels in die Form und einer inaktiven Position bewegbar ist. Schmierstoff, hier ein mit Kohlenstoffpartikeln versetztes Öl wird nach einem vorgegebenen Plan intervallweise über die offene Oberseite in die Form eingesprüht. Jeder der mehreren Formen einer Glasformmaschine kann mit einer solchen Vorrichtung ausgerüstet sein. Alternativ hierzu ist der Einsatz einer entlang der Glasformmaschine beweglichen Vorrichtung erwähnt.

Aus der WO 2010/055251 A1 ist ein Verfahren zur Herstellung von Hohlglasartikeln bekannt, wobei entlang der Vorformen einer I.S. Maschine auf einer Schiene aufgelagert ein Roboter verfahrbar angeordnet ist. Der Roboter trägt unterschiedliche Geräte und kann zum Austauschen einer Vorform, zum Schmieren der Vorform und für Reinigungszwecke eingesetzt werden. Er kann auch zum Führen von Messgeräten, wie z. B. einem Pyrometer oder von einer oder mehreren Kameras benutzt werden.

Aus der Druckschrift US 3 814 594 A ist eine Glasformmaschine bekannt, welche zwei Formen umfasst, die gemeinsam um eine vertikale Achse an einem Maschinenrahmen schwenkbar gelagert sind. Den Formen ist eine um eine horizontale Achse schwenkbare, zwei rohrförmige in Sprühdüsen endende Schmiermittelzuführungsleitungen aufweisende Schmiermittelversorgungseinrichtung zugeordnet. Die Schmiermittelzuführungsleitungen sind zum Einbringen einer Schmiermittels in die genannten Formen bestimmt.

Aus der Druckschrift US 3 814 594 A ist eine Glasformmaschine bekannt, bei der einer Form zum Einbringen eines Schmiermittels ein Roboter zugeordnet ist, welcher sechs Bewegungsachsen für das Einbringen des Schmiermittels aufweist und im Übrigen lediglich als Ganzes vertikal bewegbar ist.

Schließlich ist aus der FR 2 901 551 A1 ein Verfahren zur automatischen Schmierung der Formen zur Herstellung von Hohlglasartikeln bekannt, wobei wiederum ein ein Schmierwerkzeug tragender Roboter entlang der Vorformen einer I.S.-Maschine auf einer Schiene beweglich angeordnet ist. Das Schmierwerkzeug besteht aus einer Lanze, an deren freien Ende Zerstäuberdüsen angebracht sind und es befinden sich die Formhälften der Vorform während der Schmierung deren Innenwandungen in einem Schließzustand. Zur Schmierung der zugehörigen Mündungsform werden die Formhälften in den Öffnungszustand überführt, wobei stets die Lanze in die Vorform bzw. den Zwischenraum der Formhälften eingeführt wird. Die einzelnen Phasen eines Schmiervorgangs werden unter Mitwirkung einer zentralen Steuerung abgewickelt.

Dieser Stand der Technik lässt erkennen, dass eine Verwendung von beweglichen Robotern in Verbindung mit Glasformmaschinen als allgemein gebräuchlich anzusehen ist, wobei unterschiedliche Funktionen zu erfüllen sind, die mit dem Betrieb der Glasformmaschine in Verbindung stehen und inhaltlich erheblich über ein Schmieren hinausgehen. Der Roboter ist zum Zusammenwirken mit den einzelnen Stationen der I.S. Maschine bestimmt und dementsprechend entlang der Reihe der nebeneinander angeordneten Vorformen verfahrbar. Aufgrund letztgenannter Eigenschaft bildet er jedoch ein potentielles Sicherheitsrisiko, da eine Trennung von beweglichen Maschinenstrukturen einerseits und einer Bedienerseite andererseits nicht oder nur unzureichend gegeben ist. Dies betrifft nicht nur die Bewegung des Roboters entlang der Vorformenseite sondern gleichermaßen auch die Bewegungen von durch den Roboter geführten Werkzeugen, Geräten usw. Diese Umstände machen mit Hinblick auf eine Vermeidung von Unfallgefahren besondere Sicherungsmaßnahmen erforderlich.

Aus der DE 60 2005 002 072 T2 ist eine Bearbeitungsstation für Scheiben aus Glas bekannt, welche aus einem Tisch besteht, oberhalb welchem ein Bearbeitungskopf in dessen Horizontalebene zweidimensional verfahrbar angeordnet ist. Der Tisch ist ferner mit Transportbändern versehen, welche mit der Maßgabe dimensioniert sind, dass ein Beladen mit den zu bearbeitenden Scheiben sowie ein Entladen der bearbeiteten Scheiben in jedem Fall außerhalb des Arbeitsbereichs der Bearbeitungsstation erfolgen können, so dass Belange des Arbeitsschutzes gewahrt sind.

Es ist vor diesem Hintergrund die Aufgabe der Erfindung, eine Vorrichtung der eingangs genannten Art in einfacher Weise mit Hinblick auf einen verbesserten Schutz einer Bedienerseite bei gleichzeitiger Verbesserung betrieblicher Kontroll- und Überwachungsfunktionen hin auszugestalten. Gelöst ist diese Aufgabe bei einer solchen Vorrichtung durch die Merkmale des Kennzeichnungsteils des Anspruchs 1.

Erfindungswesentlich ist hiernach, dass ein solches, zur Führung von Werkzeugen und Geräten bestimmtes, entlang der Glasformmaschine bewegliches Trägersystem vorgesehen ist, welches durch eine lediglich zu einer Maschinenseite hin offene, im Übrigen jedoch geschlossene Struktur gekennzeichnet ist. Innerhalb dieser Struktur ist wenigstens ein Manipulationsorgan angebracht, dessen freies Ende zwischen einer aktiven und einer inaktiven Stellung bewegbar ist und als solches zur unmittelbaren Anbindung der genannten Werkzeuge und / oder Geräte eingerichtet ist. Durch die zu einer Bedienerseite somit geschlossene Ausbildung des Trägersystems ist Sicherheitsgesichtspunkten hinreichend Rechnung getragen, so dass insbesondere ein mit möglichen Unfallgefahren verbundener Eingriff eines Bedieners in den der Glasformmaschine zugekehrten Bereich, in dem auch das Werkzeug bzw. das Gerät bewegt wird, zuverlässig unterbunden ist. Das Trägersystem ist an einer schienenartigen Führung aufgehängt und entlang dieser motorisch verfahrbar. Die Führung ist in der erforderlichen Höhe in vorteilhafter Weise unmittelbar am Maschinenrahmen der Vorrichtung befestigt. Nach Maßgabe der Art des durch das Werkzeug bzw. das Gerät gegebenen Eingriffs kann dieser auch bei ansonsten unverändert fortgesetztem Maschinenbetrieb erfolgen. Von Vorteil ist, dass das freie Ende des Manipulationsorgans in dessen inaktiver Stellung in das Trägersystem zurückgezogen ist, welches zweckmäßigerweise auch für das zu bewegende Werkzeug oder Gerät gilt, so dass sich während eines Verfahrens des Trägersystems entlang der Vorrichtung bzw. der Maschine keine aus diesem wesentlich herausragende Strukturen ergeben.

Das Trägersystem kann entsprechend den Merkmalen des Anspruchs 2 beispielsweise entlang einer Vorformenseite der Glasformmaschine bewegbar sein. Eine Bewegung entlang anderer Maschinenabschnitte wird jedoch nicht ausgeschlossen.

Die Merkmale der Ansprüche 3 und 4 sind auf eine konstruktive Ausbildungsvarianten des Trägersystems gerichtet. Dessen Wandungen können geschlossen oder auch teilweise gitterartig ausgestaltet sein, solange deren Hauptfunktion gesichert ist, nämlich einen Eingriff eines Bedieners maschinenseitig zu verhindern.

Die Merkmale des Anspruchs 5 sind auf die Ausbildung der Aufhängung des Trägersystems an der genannten Führung gerichtet. Hierbei sind jedoch auch alternative Konstruktionsformen möglich, die als Linearführung an dieser Stelle einsetzbar sind, und zwar einschließlich wälzlagergestützter Ausführungen.

Die Merkmale der Ansprüche 6 und 7 sind auf die Ausgestaltung des bei dem Trägersystem eingesetzten Manipulationsorgans gerichtet. Dieses ist mit der erforderlichen Anzahl an Gelenken ausgerüstet, die benötigt werden, um das zu führende Werkzeuge oder Gerät an seinen Wirkungsort zu überführen und dort die nötigen Bewegungsachsen bereit zu stellen. Jeder dieser Bewegungsachsen ist ein motorischer, positions- und funktionsgerecht steuerbarer Antrieb zugeordnet. Das Trägersystem kann ein, zwei oder auch mehrere solcher Manipulationsorgane tragen und somit auch für komplexe Wartungs-, Mess- und sonstige Eingriffe ausgerüstet sein.

Gemäß den Merkmalen der Ansprüche 8 und 9 trägt das Manipulationsorgan eine Sprühvorrichtung oder einen Greifer. Das Trägersystem kann somit für Zwecke der Schmierung benutzt werden und steht zu diesem Zweck zusätzlich mit einem Schmierstoffreservoir in Verbindung. Die nähere Ausgestaltung der Sprühvorrichtung kann beliebig sein und ist an den Zweck der Schmierung, insbesondere die Eigenschaften des zu schmierenden Maschinenelements angepasst. Ein Greifer an dieser Stelle ist beispielsweise zum Zweck einer Montage oder Demontage von Maschinen-elementen oder auch kompletten Baugruppen einsetzbar und benötigt dementsprechend zur Steuerung weitere Bewegungsachsen sowie Antriebe. Unter Umständen können in diesem Zusammenhang nach Maßgabe der Komplexität der auszuführenden Montageschritte auch mehrere Manipulationsorgane zum Einsatz kommen, die mit unterschiedlichen Werkzeugen bzw. Geräten ausgerüstet sind. Diese sind dem Fachmann jedoch geläufig, so dass insoweit auf eine weitergehendere Beschreibung verzichtet werden kann.

Gemäß den Merkmalen des Anspruchs 10 ist das an dem freien Ende des Manipulationsorgans angebrachte Gerät ein Thermometer, insbesondere ein Strahlungsthermometer, welches die Möglichkeit eröffnet, berührungslos Oberflächentemperaturen zu erfassen. Auf diese Weise können an unterschiedlichen Stellen der Vorrichtung Überwachungen durchgeführt werden, indem örtlich auftretende Temperaturen darauf hin kontrolliert werden, ob die gemessenen Werte innerhalb eines Toleranzbereichs liegen. Dies kann die Temperatur eines zu formenden Glastropfens, jedoch nahezu auch sämtlicher Maschinenteile betreffen einschließlich der Temperatur eines Schmiermittels sein.

Gemäß den Merkmalen des Anspruchs 11 kann es sich bei dem an dem freien Ende gehaltenen Gerät um eine Kamera handeln. Dies eröffnet umfassende Möglichkeiten messtechnischer und geometrischer Art, beispielsweise bei der Kontrolle von Parametern gestaltlicher Art der hergestellten Hohlglasartikel, bei der Messung von Geschwindigkeiten sowie allgemein bei der Analyse von Bewegungsabläufen.

Gemäß den Merkmalen des Anspruchs 12 kann es sich bei dem an dem freien Ende des Manipulationsorgans gehaltenen Gerät auch um ein Montage- oder Handlinggerät handeln, welches bei der Änderung von Maschineneinstellungen nutzbar ist. Hierbei kann es sich um Einstellungen nahezu beliebiger Art handeln, beispielsweise bei der Verstellung von Variablen von Formen, Mechanismen, dem Rinnensystem usw.

Sämtliche Werkzeuge sowie Geräte, die durch ein Manipulationsorgan getragen werden, stehen entsprechend den Merkmalen des Anspruchs 13 mit einer Maschinensteuerung der Vorrichtung in Verbindung, so dass deren Funktionen zentral steuer- und kontrollierbar sind. Dies eröffnet in Verbindung mit einschlägigen Datenspeichern die vorteilhafte Möglichkeit, Kontroll- und Wartungsfunktionen automatisiert nach einem vorgebbaren Zeitplan abzuwickeln.

Die Erfindung wird im Folgenden unter Bezugnahme auf die beiliegenden Zeichnungen näher erläutert werden. Es zeigen:
Fig. 1 eine Seitenansicht der Vorformenseite einer I.S.-Maschine;
Fig. 2 eine Draufsicht auf die I.S.-Maschine entsprechend einer Blickrichtung II der Fig.1;
Fig. 3 eine Stirnansicht der I.S.-Maschine entsprechend einer Blickrichtung III der Fig.1;
Fig. 4 eine Darstellung eines ersten Ausführungsbeispiels eines zu steuernden Gerätes bzw. Werkzeugs;
Fig. 5 eine Draufsicht gemäß einem Pfeil V der Fig. 4;
Fig. 6 eine Darstellung eines zweiten Ausführungsbeispiels eines zu steuernden Gerätes bzw. Werkzeugs;
Fig. 7 eine Draufsicht gemäß einem Pfeil VII der Fig. 6;
Fig. 8 eine Darstellung eines dritten Ausführungsbeispiels eines zu steuernden Gerätes bzw. Werkzeugs;
Fig. 9 eine Draufsicht entsprechend einem Pfeil IX der Fig. 8;
Fig. 10 eine Darstellung eines vierten Ausführungsbeispiels eines zu steuernden Gerätes bzw. Werkzeugs;
Fig. 11 eine Draufsicht entsprechend einem Pfeil XI der Fig. X.

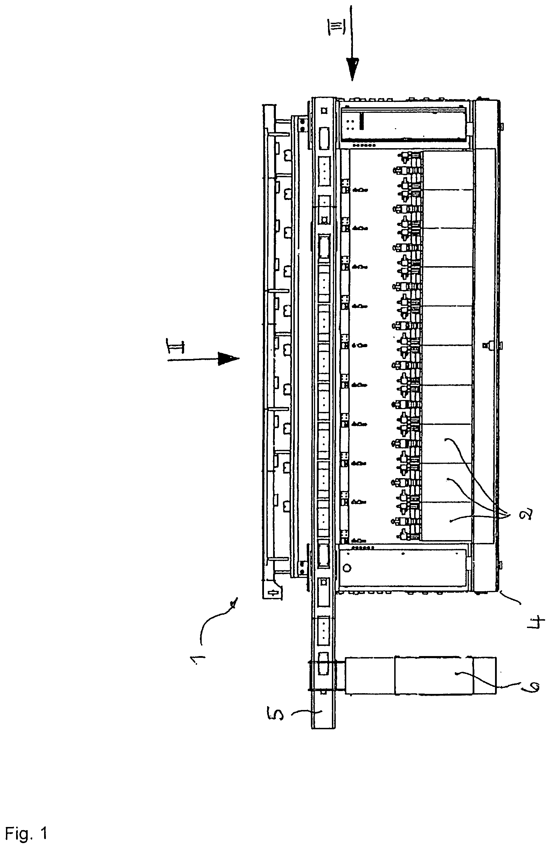

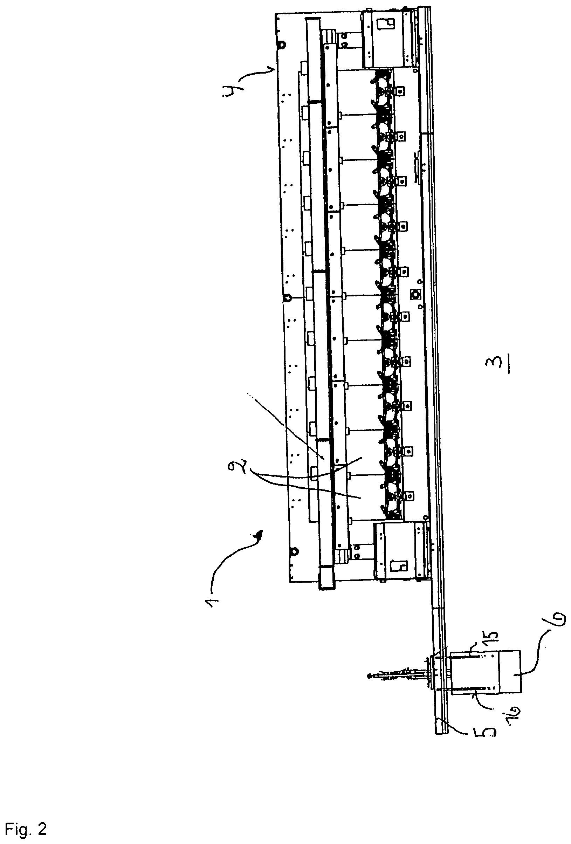

Mit 1 ist in den Fig. 1 bis 3 eine Glasformmaschine in ihrer Gesamtheit bezeichnet, welche durch eine Nebeneinanderanordnung zahlreicher, einen modularen Aufbau aufweisender Stationen (individual section) gekennzeichnet ist, in denen u. a. jeweils mehrere Vorformen untergebracht sind. Fig. 1 zeigt dementsprechend die Vorformenseite 3.

Die Stationen sind in einen Maschinenrahmen 4 eingesetzt, der bodenseitig aufsteht und entlang dessen Vorformenseite 3 sich horizontal eine schienenartige Führung 5 erstreckt. Die Führung 5 steht mit dem Maschinenrahmen in fester Verbindung.

In Längsrichtung der Führung 5 verschiebbar und in definierten Positionen vor einer jeden der Stationen 2 positionierbar ist ein Gehäuse 6, welches in Richtung auf die Vorformenseite 3 hin offen und im Übrigen geschlossen ausgebildet ist. Es kann teilweise die Form eines Schutzgitters aufweisen und ist in jedem Fall dazu bestimmt und eingerichtet, örtlich eine Trennung zwischen einer Bedienerseite und beweglichen Maschinenteilen im Bereich der Glasformmaschine darzustellen. Auf eine zeichnerische Wiedergabe von Antriebsorganen zum Vorschub des Gehäuses 6 entlang der Führung 5 ist aus Gründen der Übersichtlichkeit verzichtet worden.

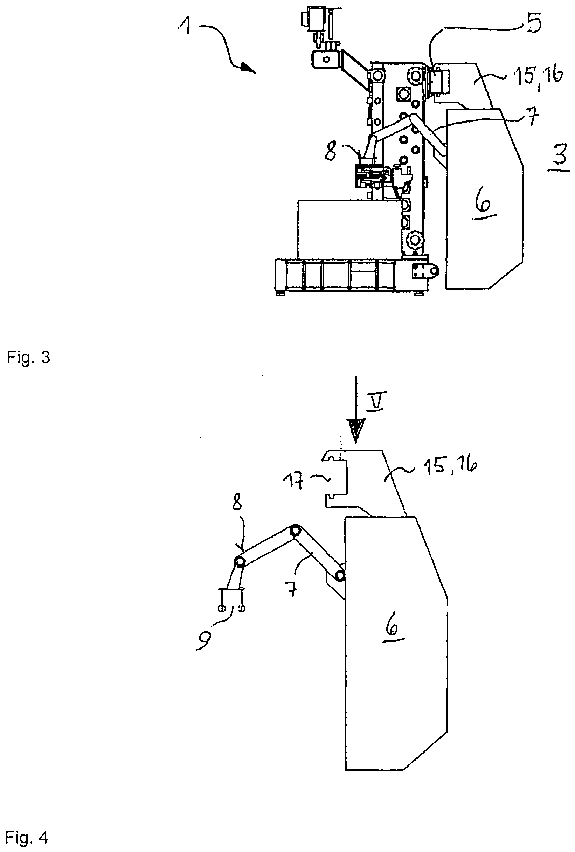

Das Gehäuse 6 ist als bewegliches Trägersystem unterschiedlicher Werkzeuge und Geräte eingerichtet und es wird hierzu ergänzend auf die zeichnerischen Darstellungen der Figuren 4 bis 11 Bezug genommen. Wesentlich ist, dass diese Geräte und Werkzeuge innerhalb des Gehäuses 6 gehalten sind und zur Ausübung bestimmter Funktionen an der Station 2 eingerichtet sind, vor der das Gehäuse 6 gerade positioniert ist. Dies bedeutet, dass eine Trenn- bzw. Schutzwirkung für eine Bedienerseite auch hinsichtlich dieser Geräte und Werkzeuge eingerichtet ist.

Innerhalb des Gehäuses 6 ist ein mehrere Gelenke aufweisendes Manipulationsorgan 7 angebracht, welches mit zeichnerisch nicht dargestellten, den unterschiedlichen Bewegungsachsen jeweils zugeordneten Antrieben in Wirkverbindung steht, so dass das freie Ende 8 eines jeden Manipulationsorgans 7 unter Mitwirkung einer ebenfalls nicht dargestellten Steuerung innerhalb eines definierten Wirkungsbereichs beliebige Positionen ansteuern kann, und zwar in einer ebenfalls steuerbaren Orientierung. Die Gelenke bzw. Bewegungsachsen des Manipulationsorgans 7 sind mit der Maßgabe eingerichtet, dass die erforderlichen, für die Funktion der getragenen Werkzeuge und Geräte erforderlichen Freiheitsgrade gegeben sind.

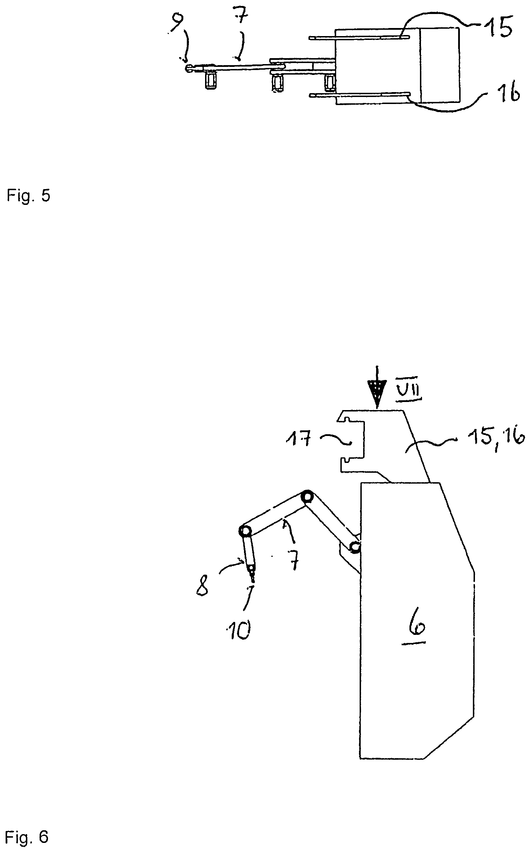

Gemäß den Figuren 4 und 5 trägt das freie Ende 8 eine Sprühvorrichtung 9 und es ist das Manipulationsorgan 7 somit zum Schmieren von Maschinenteilen, z. B. einer Vorform bestimmt.

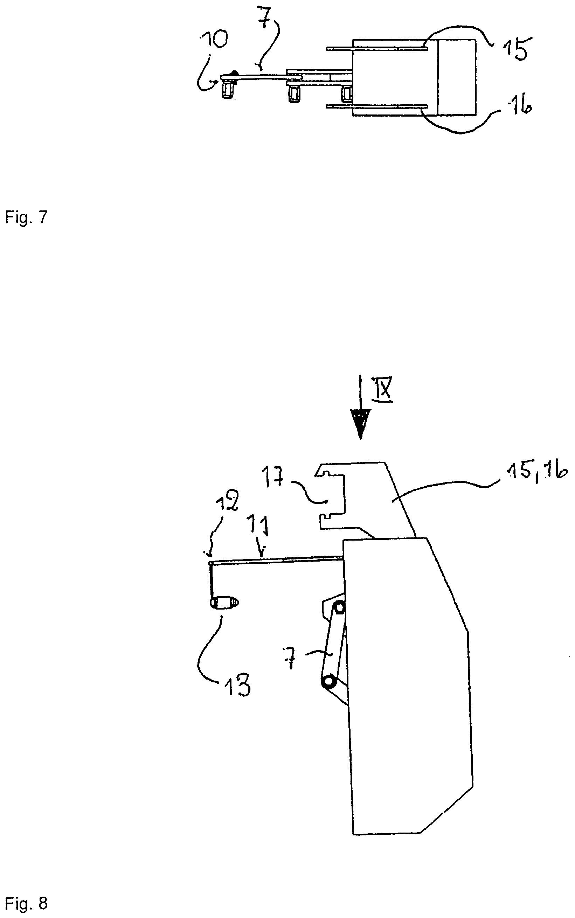

Gemäß den Figuren 6 und 7 trägt das freie Ende 8 einen Greifer 10 und es ist das Manipulationsorgan 7 somit zur Ausübung von Montage- oder Demontagefunktionen bestimmt.

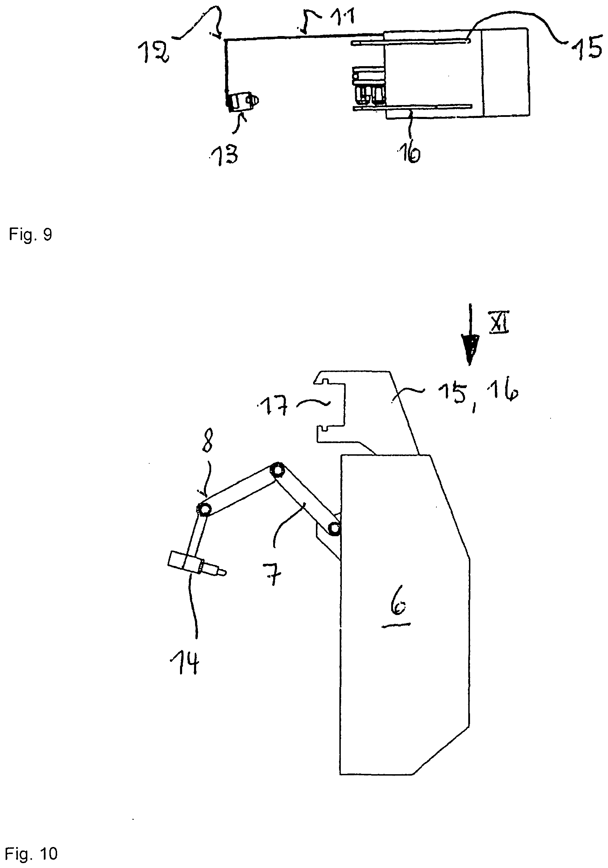

Gemäß den Figuren 8 und 9 trägt das Gehäuse 6 zusätzlich ein weiteres modifiziertes Manipulationsorgan 11, an dessen freien Ende 12 eine Kamera 13 gehalten ist. Auf diese Weise können mit den Mitteln der industriellen Bildverarbeitung Kontrollfunktionen ausgeübt werden. Wesentlich ist, dass auch in diesem Fall das Manipulationsorgan 11 innerhalb eines definiertes Wirkungsbereichs unter Mitwirkung der Steuerung beliebig positioniert werden kann, so dass eine optische Kontrolle aus nahezu beliebigen Blickwinkeln darstellbar ist.

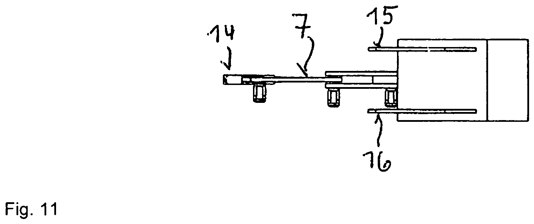

Gemäß den Figuren 10 und 11 trägt das freie Ende 8 ein Thermometer 14, z. B. ein IR-Thermometer. Dies eröffnet weitere Kontrollmöglichkeiten insbesondere im Bereich der Formen, des Glaswerkstoffs usw.

Jedes Manipulationsorgan 7, 11 ist zwischen einer inaktiven Position, in der es zumindest größtenteils in das Gehäuse 6 zurückgezogen ist und einer aktiven Position, in das an dem jeweiligen freien Ende 8, 12 befindliche Werkzeug oder Gerät sich im betrieblichen Einsatz befindet verschwenkbar.

Das Gehäuse 6 weist eine global schüsselartige, in Richtung auf die Vorformenseite 3 hin offene Gestalt auf und ist oberseitig mit zwei voneinander seitlich beabstandeten Haltern 15, 16 versehen, die eine seitliche, für einen Eingriff mit der Führung 5 bestimmte Ausnehmung 17 aufweisen.

Es sind zahlreiche Modifikationen insbesondere des Gehäuses 6 möglich. So kann dieses beispielsweise mit mehr als zwei, im Bedarfsfall unterschiedliche Werkzeuge bzw. Geräte tragenden Manipulationsorganen ausgerüstet sein, und zwar mit dem Ziel mehrere der in Verbindung mit dem Betrieb der Glasformmaschine anfallenden Kontroll-, Mess-, Wartungs-, Montage- und Demontagefunktionen in einem gegenüber einer Bedienerseite weitestgehend abgeschirmten Bereich ausüben zu können.

### Bezugszeichenliste:

- 1.: Glasformmaschine
- 2.: Station
- 3.: Vorformenseite
- 4.: Maschinenrahmen
- 5.: Führung
- 6.: Gehäuse
- 7.: Manipulationsorgan
- 8.: Ende
- 9.: Sprühvorrichtung
- 10.: Greifer
- 11.: Manipulationsorgan
- 12.: Ende
- 13.: Kamera
- 14.: Thermometer
- 15.: Halter
- 16.: Halter
- 17.: Ausnehmung

## Patentansprüche

1. Vorrichtung zur Herstellung von Hohlglasartikeln, nämlich I.S.-Maschine, mit mehreren, nebeneinander angeordneten Stationen, umfassend zumindest ein Rinnensystem zur Zuführung schmelzflüssiger, zu formender Glastropfen, eine Anordnung von Formen zur Durchführung des Formgebungsprozesses nebst zugehöriger Peripheriemechanismen und eine weitere Anordnung zum Austrag abschließend geformter Hohlglasartikel, mit einem, entlang der Maschine, nämlich einer schienenartigen Führung (5) beweglich angeordneten und in definierten Positionen anhaltbaren Trägersystem für Werkzeuge, Messsysteme und sonstige, für Kontroll- und Wartungszwecke einsetzbare Geräte, **dadurch gekennzeichnet, dass** das Trägersystem eine zur Maschinenseite hin offene, im Übrigen geschlossen ausgestaltete, an der Führung (5) aufgehängte und entlang dieser motorisch bewegbare Struktur bildet, dass innerhalb des Trägersystems zumindest ein Manipulationsorgan (7, 11) angeordnet ist, dessen freies Ende (8, 12) zum Führen eines Werkzeugs, eines Messorgans oder eines sonstigen zu Kontroll- und/oder Wartungszwecken benötigten Gerätes eingerichtet ist, wobei das freie Ende (8, 12) des Manipulationsorgans (7, 11) zwischen einer aktiven, dem Einsatzort an oder in der Maschine zugekehrten Stellung und einer inaktiven, in das Trägersystem zurückgezogenen Stellung bewegbar ist.

2. Vorrichtung nach Anspruch 1, **dadurch gekennzeichnet, dass** das Trägersystem entlang einer Vorformenseite (3) der Vorrichtung bewegbar ist.

3. Vorrichtung nach Anspruch 1 oder 2, **dadurch gekennzeichnet, dass** das Trägersystem ein schüsselartiges Gehäuse (6) bildet, dessen Wandungen geschlossen ausgestaltet sind.

4. Vorrichtung nach Anspruch 1 oder 2, **dadurch gekennzeichnet, dass** das Trägersystem ein schüsselartiges Gehäuse bildet, dessen Wandungen zumindest teilweise gitterartig ausgestaltet sind.

5. Vorrichtung nach einem der Ansprüche 3 oder 4, **dadurch gekennzeichnet, dass** das Gehäuse (6) oberseitig mit zwei voneinander beabstandeten Haltern (15, 16) versehen ist, die zum Eingriff mit der Führung (5) ausgebildet sind.

6. Vorrichtung nach einem der Ansprüche 1 bis 5, **dadurch gekennzeichnet, dass** das Manipulationsorgan (7, 11) mehrere Gelenke aufweist.

7. Vorrichtung nach einem der vorangegangenen Ansprüche 1 bis 6, **dadurch gekennzeichnet, dass** jedes Manipulationsorgan zumindest ein Werkzeug oder Gerät trägt.

8. Vorrichtung nach einem der Ansprüche 1 bis 7, **dadurch gekennzeichnet, dass** das Werkzeug eine Sprühvorrichtung (9) zum Austragen eines Schmiermittels ist.

9. Vorrichtung nach einem der Ansprüche 1 bis 7, **dadurch gekennzeichnet, dass** das Werkzeug ein zum Erfassen und Handhaben von Maschinen-elementen bestimmter Greifer (10) ist.

10. Vorrichtung nach einem der Ansprüche 1 bis 7, **dadurch gekennzeichnet, dass** das Messorgan ein Thermometer (14) ist.

11. Vorrichtung nach einem der Ansprüche 1 bis 7, **dadurch gekennzeichnet, dass** das Gerät eine zu Mess- und Überwachungszwecken eingerichtete Kamera (13) ist.

12. Vorrichtung nach einem der Ansprüche 1 bis 7, **dadurch gekennzeichnet, dass** das Gerät ein Montage- oder Handlinggerät zur Durchführung von Maschineneinstellungen ist.

13. Vorrichtung nach einem der Ansprüche 1 bis 12, **dadurch gekennzeichnet, dass** die an dem freien Ende (8, 12) des Manipulationsorgans (7, 11) getragenen Werkzeuge bzw. Geräte mit einer Maschinensteuerung in Wirkverbindung stehen.

## Claims

1. Device for manufacturing hollow glass articles, namely an I.S. machine, having a plurality of stations disposed next to one another, comprising at least one channel system for supplying molten glass gobs to be formed, an arrangement of moulds for carrying out the forming process along with associated peripheral mechanisms, and a further arrangement for discharging finally formed hollow glass articles, having a carrier system for tools, measuring systems and other apparatuses which can be used for control and maintenance purposes, said carrier system being disposed to be moved along the machine, namely along a rail-like guide (5), and being able to stop at defined positions, **characterised in that** the carrier system forms a structure which is open towards the machine side, but otherwise formed in a closed manner, suspended on the guide (5) and can be moved along same by motor, that at least one manipulating member (7, 11) is disposed within the carrier system, the free end (8, 12) of which manipulating member is arranged to guide a tool, a measuring member or another apparatus required for control and/or maintenance purposes, wherein the free end (8, 12) of the manipulating member (7, 11) can be moved between an active position facing the point of use on or in the machine, and an inactive position retracted into the carrier system.

2. Device as claimed in claim 1, **characterised in that** the carrier system can be moved along a parison mould side (3) of the device.

3. Device as claimed in claim 1 or 2, **characterised in that** the carrier system forms a bowl-like housing (6), the walls of which are formed in a closed manner.

4. Device as claimed in claim 1 or 2, **characterised in that** the carrier system forms a bowl-like housing, the walls of which are at least partially formed in a grid-like fashion.

5. Device as claimed in any one of claims 3 or 4, **characterised in that** the upper side of the housing (6) is provided with two mutually spaced brackets (15, 16) which are designed for engagement with the guide (5).

6. Device as claimed in any one of claims 1 to 5, **characterised in that** the manipulating member (7, 11) has multiple joints.

7. Device as claimed in any one of the preceding claims 1 to 6, **characterised in that** each manipulating member supports at least one tool or apparatus.

8. Device as claimed in any one of claims 1 to 7, **characterised in that** the tool is a spraying device (9) for discharging a lubricant.

9. Device as claimed in any one of claims 1 to 7, **characterised in that** the tool is a gripper (10) intended for grasping and handling machine elements.

10. Device as claimed in any one of claims 1 to 7, **characterised in that** the measuring member is a thermometer (14).

11. Device as claimed in any one of claims 1 to 7, **characterised in that** the apparatus is a camera (13) designed for measuring and monitoring purposes.

12. Device as claimed in any one of claims 1 to 7, **characterised in that** the apparatus is a mounting or handling apparatus for carrying out machine adjustments.

13. Device as claimed in any one of claims 1 to 12, **characterised in that** the tools or apparatuses supported on the free end (8, 12) of the manipulating member (7, 11) are operatively connected to a machine controller.

## Revendications

1. Dispositif de fabrication de produits en verre creux, à savoir des machines I.S, comportant plusieurs postes disposés côte à côte, comprenant au moins un système de rigoles pour l'acheminement de gouttes de verre à mouler en fusion, un agencement de moules pour la réalisation du processus de moulage parallèlement aux mécanismes périphériques correspondants et un autre agencement pour l'évacuation de produits en verre creux moulés finalement, avec un système porteur le long de la machine, à savoir un guidage en forme de rail (5), disposé de façon mobile et pouvant être arrêté dans des positions définies pour des outils, des systèmes de mesure et autres, des appareils pouvant être utilisés à des fins de contrôle et de maintenance, **caractérisé en ce que** le système porteur forme une structure ouverte du côté de la machine, configurée de façon fermée par ailleurs, suspendue au guidage (5) et mobile de façon motorisée le long de celui-ci, **en ce qu'**à l'intérieur du système porteur est disposé au moins un organe de manipulation (7, 11), dont l'extrémité libre (8, 12) est aménagée pour guider un outil, un organe de mesure ou un autre appareil nécessaire à des fins de contrôle et/ou de maintenance, dans lequel l'extrémité libre (8, 12) de l'organe de manipulation (7, 11) est mobile entre une position active tournée vers le lieu d'utilisation sur ou dans la machine et une position inactive, en retrait dans le système porteur.

2. Dispositif selon la revendication 1, **caractérisé en ce que** le système porteur est mobile le long d'un côté de prémoulage (3) du dispositif.

3. Dispositif selon la revendication 1 ou 2, **caractérisé en ce que** le système porteur forme un boîtier de type cuvette (6) dont des parois sont configurées de façon fermée.

4. Dispositif selon la revendication 1 ou 2, **caractérisé en ce que** le système porteur forme un boîtier de type cuvette dont les parois sont configurées au moins en partie comme une grille.

5. Dispositif selon l'une quelconque revendications 3 ou 4, **caractérisé en ce que** le boîtier (6) est prévu sur le haut avec deux supports (15, 16) distants l'un de l'autre, qui sont conçus pour la mise en prise avec le guidage (5).

6. Dispositif selon l'une quelconque des revendications 1 à 5, **caractérisé en ce que** l'organe de manipulation (7, 11) présente plusieurs articulations.

7. Dispositif selon l'une quelconque des revendications 1 à 6 précédentes, **caractérisé en ce que** chaque organe de manipulation porte au moins un outil ou un appareil.

8. Dispositif selon l'une quelconque des revendications 1 à 7, **caractérisé en ce que** l'outil est un dispositif de pulvérisation (9) pour évacuer un lubrifiant.

9. Dispositif selon l'une quelconque des revendications 1 à 7, **caractérisé en ce que** l'outil est un grappin (10) déterminé pour la saisie et le maniement d'éléments de machine.

10. Dispositif selon l'une quelconque des revendications 1 à 7, **caractérisé en ce que** l'organe de mesure est un thermomètre (14).

11. Dispositif selon l'une quelconque des revendications 1 à 7, **caractérisé en ce que** l'appareil est une caméra (13) aménagée à des fins de mesure et de surveillance.

12. Dispositif selon l'une quelconque des revendications 1 à 7, **caractérisé en ce que** l'appareil est un appareil de montage ou de manutention pour la réalisation de réglages de machines.

13. Dispositif selon l'une quelconque des revendications 1 à 12, **caractérisé en ce que** les outils ou appareils portés à l'extrémité libre (8, 12) de l'organe de manipulation (7, 11) sont en liaison active.
